# EUROPÄISCHE PATENTSCHRIFT

(11) **EP 3 504 444 B1**
(45) Veröffentlichungstag und Bekanntmachung des Hinweises auf die Patenterteilung: **26.02.2025**
(21) Anmeldenummer: 17754155.4
(22) Anmeldetag: 17.08.2017
(51) Int. Cl.: F15B 1/26, F15B 21/04

(54) **HYDRAULISCHE EINRICHTUNG ZUR ENTGASUNG UND ZUR ENTWÄSSERUNG EINES HYDRAULIKÖLS**
HYDRAULIC DEVICE FOR DEGASSING AND DEWATERING A HYDRAULIC OIL
DISPOSITIF HYDRAULIQUE POUR LE DÉGAZAGE ET LA DÉSHYDRATATION D'UNE HUILE HYDRAULIQUE

(30) Priorität: 25.08.2016 DE 102016216002
(43) Veröffentlichungstag der Anmeldung: 03.07.2019
(73) Patentinhaber: Robert Bosch GmbH, 70442 Stuttgart (DE)
(72) Erfinder: HABR, Klaus, 97828 Marktheidenfeld (DE); MEHLING, Hermann, 97753 Karlstadt-Stetten (DE); MUELLER, Manuel, 67551 Worms (DE)
(86) Internationale Anmeldenummer: PCT/EP2017/070801
(87) Internationale Veröffentlichungsnummer: WO 2018/036889

(56) Entgegenhaltungen:
- CN-A- 1 087 375
- CN-B- 103 062 163
- DE-A1- 10 323 068
- JP-A- 2013 002 031

## Beschreibung

Die Erfindung betrifft eine hydraulische Einrichtung zur Entgasung und zur Entwässerung eines Hydrauliköls mit einer Druckquelle, von der aus das zu entgasende Hydrauliköl über eine Drosselstelle strömt.

Im Hydrauliköl enthaltene Luft stellt in Hydraulikanlagen aus unterschiedlichen Gründen ein Problem dar. Je höher der freie oder ungelöste Luftanteil ist, desto größer ist die an sich unerwünschte Kompressibilität des Hydrauliköls. Sind in dem Hydrauliköl, das die Pumpe ansaugt auch Luftblasen enthalten, so kann das zu einem schlechten Wirkungsgrad und zu einem hohen Geräuschpegel führen. Je mehr freie Luft sich in Hydrauliköl befindet, desto schneller altert das Hydrauliköl. Im Allgemeinen versucht man, durch einen großzügig dimensionierten Vorratsbehälter mit entsprechend großer Verweildauer des hydraulischen Öls die in einer hydraulischen Anlage auftretenden Luftbläschen aus dem im Vorratsbehälter befindlichen Hydrauliköl aufsteigen und ausgasen zu lassen. Dieser Prozess kann je nach Größe der Luftblasen relativ langsam ablaufen.

Es ist auch schon vorgeschlagen worden, die Ausgasung des Hydrauliköls durch die Einwirkung von Ultraschall oder durch die Erzeugung eines Unterdruckes zu beschleunigen und zu vervollkommnen. Will man eine Entgasung durch Ultraschall oder ein Vakuum fördern, so sind zusätzliche Gerätschaften erforderlich, die Kosten verursachen, die Störanfälligkeit erhöhen und gegebenenfalls Energie verbrauchen. Außerdem können die Methoden eine zusätzliche Ölbelastung verursachen.

Aus der CN 203023182 U ist schon ein System zur Entgasung von Hydrauliköl bekannt, bei der von einer Pumpe aus einem Tank angesaugtes und gefördertes Hydrauliköl über eine Düsenanordnung zu dem Tank zurückströmt. Nach dem Durchströmen der Düsenanordnung kann Luft, die in dem Hydrauliköl enthalten ist, durch Kavitation separiert und durch eine, wie es in der Druckschrift heißt, Entgasungsvorrichtung abgeführt werden.

Aus der CN 1087375 ist eine hydraulische Anlage bekannt, bei der ein Ölbehälter durch eine bis zu einer bestimmten Höhe reichende Trennwand in zwei Teilräume aufgeteilt ist. Eine erste Hydraulikpumpe saugt bodenseitig aus dem einen Teilraum des Ölbehälters Hydrauliköl an. Eine zweite Pumpe fördert über ein Drosselelement Hydrauliköl bodenseitig in den zweiten Teilraum hinein, wobei sich nach dem Drosselelement Luftblasen bilden, die in dem sich in dem zweiten Teilraum befindlichen Öl aufsteigen und abgesaugt werden. Der Ölstand in dem zweiten Teilraum ist durch die Höhe der Trennwand bestimmt.

Die Druckschrift JP 2013-2031 offenbart eine Vorrichtung zur Entfernung von Luftblasen aus einem Hydrauliköl. Das Hydrauliköl wird dazu aus einer Hochdruckkammer über mehrere Drosseln in einen Niederdruckraum gepresst, wobei Kavitation entsteht. In den Niederdruckraum münden auch mehrere Niederdruckeingänge für Hydrauliköl.

Neben der im Hydrauliköl einer hydraulischen Anlage enthaltenen Luft hat auch im Hydrauliköl enthaltenes Wasser diverse unerwünschte Auswirkungen. Wasser beschleunigt die Alterung des Hydrauliköls durch Oxidation, verschlechtert die Schmiereigenschaften und beeinträchtigt die Filtrierbarkeit des Öles durch hydrolytische Zersetzungs- und Korrosionsprodukte und es fördert die Korrosion von Oberflächen. Deshalb ist man bemüht, den Gehalt von Wasser in Hydrauliköl immer möglichst gering zu halten.

Es gibt verschiedene bekannte Ansätze zur Reduktion von Wasser in Hydraulikölen. Hierbei muss zwischen der Reduktion von gelöstem Wasser und der Reduktion von freiem Wasser unterschieden werden. Freies Wasser kann entweder in Form einer Emulsion oder einer gesammelten Wasserablagerung beispielsweise am Tankboden vorliegen. Freies Wasser kann durch Dränage, durch Zentrifugen oder durch saugfähige Filter aus Hydrauliköl entfernt werden. Bei der Dränage wird ausgenutzt, dass sich freies Wasser am Boden eines Hydrauliköl enthaltenen Tanks absetzt und von dort abgeführt werden kann. Bei der Verwendung einer Zentrifuge wird freies Wasser aufgrund aufgebrachter Zentrifugalkräfte von Hydrauliköl getrennt. Als saugfähiger Filter wird eine Filtermatrix verwendet, die mit super-absorbierendem Polymer beaufschlagt ist.

Als Verfahren zur Reduzierung des Gehalts an gelöstem Wasser in Hydrauliköl ist eine Vakuum-Dehydration bekannt, bei der das Hydrauliköl zur Trocknung einem Vakuum ausgesetzt wird. Durch den entstehenden Konzentrationsgradienten zwischen Hydrauliköl und dem evakuierten Raum wird das Wasser aus dem Hydrauliköl verdunstet. Bei diesem Verfahren kann das Hydrauliköl zusätzlich erhitzt werden. Aufgrund des geringen Druckes kocht Wasser schon bei Temperaturen, bei denen Öl oder dessen Additive noch nicht beschädigt werden. Die Reduktion des Wassergehaltes im Öl wird dadurch zusätzlich beschleunigt.

Wird Öl mit freiem Wasser in die Vakuum-Dehydrationsanlage gepumpt, verdampft das Wasser direkt. Da durch die Reduktion des gelösten Wassers im Hydrauliköl erneut freies Wasser gelöst werden kann, ist die Vakuum-Dehydration letztlich auch in der Lage freies Wasser in einem System zu reduzieren, auch wenn dieses nicht direkt in die Anlage gepumpt wird, sondern sich an anderer Stelle im hydraulischen System befindet. Durch die Reduktion des gelösten Wassers kann also das Hydrauliköl erneut freies Wasser lösen, so dass die Vakuum-Dehydration letztlich auch freies Wasser aus dem Hydrauliköl abführt.

Der Erfindung liegt die Aufgabe zugrunde, eine hydraulische Einrichtung zu schaffen, die eine hochwirksame, kostengünstige und rasche Entgasung eines Hydrauliköls und ohne großen Aufwand auch eine Reduzierung des Wassergehalts des Hydrauliköls mit einer hohen Abscheidungsrate des Wassers ermöglicht.

Die Aufgabe wird bei einer hydraulischen Einrichtung, umfassend eine Druckquelle, eine Luftquelle, ein Strömungskanal, eine als Düse ausgebildete Drosselstelle, wobei zu entgasende Flüssigkeit von der Druckquelle aus über die Drosselstelle strömt, dadurch gelöst, dass die über die Drosselstelle strömende Flüssigkeitsmenge und der Durchflussquerschnitt der Drosselstelle derart aufeinander abgestimmt sind, dass sich stromab der Drosselstelle eine Kavitations- oder Superkavitationszone ausbildet, und dass ein Luftpfad vorhanden ist, dessen eines Ende an die Luftquelle angeschlossen ist, und dessen anderes Ende sich stromab der Drosselstelle direkt in oder an der (Super- )Kavitationszone befindet, sodass jegliche Art von Luft wie Umgebungsluft oder beispielsweise auch Druckluft, heiße Luft, kalte Luft oder trockene Luft von außen über den Luftpfad in das Hydrauliköl einbringbar ist. Die Düse ist so angeordnet, dass ihr Auslass mit der Mittelachse des zum Beispiel durch ein Rohr gebildeten Strömungskanals zusammenfällt.

Mit der schon früher eingereichten deutschen Patentanmeldung 10 2015 216 174.9 der Anmelderin ist eine hydraulische Einrichtung angemeldet worden, mit der mit Hilfe von Kavitation, insbesondere Superkavitation eine Abscheidung von Luft aus einem Hydrauliköl erreicht werden kann. Von Superkavitation spricht man, wenn die über die Drosselstelle, zum Beispiel eine Düse, strömende Ölmenge und der Durchflussquerschnitt der Drosselstelle derart aufeinander abgestimmt sind, dass stromab der Düse in einem Strömungskanal ein Ölstrahl erzeugt wird, der von einem zusammenhängenden Gebiet aus Flüssigkeitsdampf und Luft umgeben ist. Stromab der Drosselstelle tritt dann also Superkavitation auf. Von Superkavitation spricht man üblicherweise dann, wenn ein sehr schnell durch eine Flüssigkeit bewegter Körper rundum von Dampf umgeben ist.

Man hat dann in einer Richtung senkrecht zur Richtung der relativen Bewegung zwischen Festkörper und Flüssigkeit zentral einen Festkörper, an dessen Außenseite einen gasgefüllten Bereich und dann die Flüssigkeit. Bei der Einrichtung gemäß der Erfindung liegt eine inverse Anordnung vor. Im Zentrum befinden sich der Flüssigkeitsstrahl und damit die Flüssigkeit. Der Flüssigkeitsstrahl ist von einem gasgefüllten Bereich umgeben, der durch den den Strömungskanal bildenden Festkörper begrenzt wird. Beim Kondensieren der Flüssigkeit in dem Dampfgebiet entstehen verhältnismäßig große Luftblasen. Diese können leicht abgeschieden werden, was zu einer raschen Entgasung des Öls führt.

Luftabscheidung durch Kavitation oder Superkavitation hat überraschenderweise auch einen Effekt im Hinblick auf die Entwässerung von Hydrauliköl, da Luft temperaturabhängig Wasser aufnehmen kann und somit auch die aufgrund von (Super-)Kavitation freigesetzten Luftblasen Wasser enthalten. Wenn sich die Luftblasen an der Öloberfläche abscheiden und die Luft abgeführt wird, wird dem Öl neben Luft auch Wasser entzogen. Die mit (Super-)Kavitation verbundene Temperaturerhöhung des die Drosselstelle verlassenden Fluidstroms wirkt sich, weil Luft mit zunehmender Temperatur mehr Wasser aufnehmen kann, positiv aus.

Der Ölstrahl verläuft ausgehend vom Austritt aus der Düse bis zu seinem Kollaps entlang der Rohrmittelachse.

Durch geeignete Wahl von Druckverlust und Volumenstrom wird also zwischen der Düse und dem Strahlkollaps durch Superkavitation ein zusammenhängendes Flüssigkeitsdampf/Luftgebiet definierter Größe erzeugt, welches beim Kondensieren den Luftanteil in verhältnismäßig große Luftblasen überführt. Scheiden diese Luftblasen an der Öloberfläche im Tank ab, führt diese neben der Reduktion des Luftgehaltes auch zu einer Reduktion des Wassergehaltes im Öl.

Um die Abscheidungsrate von Wasser aus dem Öl noch zu erhöhen, ist nun ein Luftpfad vorhanden, mit der von außen jegliche Art von Luft wie Umgebungsluft oder Druckluft oder heiße Luft oder kalte Luft oder trockene Luft in das Hydrauliköl einbringbar ist.

Die Luft ist erfindungsgemäß über den Luftpfad zuführbar, dessen eines Ende an die Luftquelle angeschlossen ist, und dessen anderes Ende sich stromab der Drosselstelle direkt in oder an der (Super-)Kavitationszone befindet. Dies führt dazu, dass aus der zugeführten Luft zahlreiche sehr kleine Luftblasen mit einer großen Blasenoberfläche über die Summe aller Luftblasen entstehen. Mit der Größe der Blasenoberfläche vergrößert sich die Menge des aus dem Öl in die Luftblasen, die aus der von extern zugeführten Luft entstehen, diffundierenden Wassers und damit die Abscheidungsrate des Wassers.

Schließt sich an die Drosselstelle ein zum Beispiel durch ein Rohr gebildeter Strömungskanal mit einem gegenüber dem Durchflussquerschnitt der Drosselstelle wesentlich größeren Durchflussquerschnitt an, so wird die zusätzliche Luft vorzugsweise in den Strömungskanal eingebracht. Dazu kann der Strömungskanal in seiner Wand eine Öffnung oder auch mehrere gleichmäßig über den Umfang verteilte, sich vorzugsweise auf gleicher Höhe befindliche Öffnungen aufweisen, an die der Luftpfad angeschlossen ist.

Bevorzugt verläuft der Strömungskanal von der Düse aus gerade und im Gebrauch in Richtung der Gravitationskraft, also vertikal. Dann ist eine Asymmetrie hinsichtlich der an dem strömenden Medium angreifenden Kräfte bezüglich der Achse des Strömungskanals vermieden. Grundsätzlich ist jedoch auch eine Entgasung und Entwässerung bei einem horizontalen Verlauf des Strömungskanals oder bei einer Anordnung zwischen vertikal und horizontal möglich.

Bevorzugt ist ein Behälter zur Aufnahme von entgaster Flüssigkeit vorhanden, wobei der Strömungskanal vorteilhafterweise von der Drosselstelle aus gerade bis unter das Niveau der sich in dem Behälter befindlichen Flüssigkeit verläuft. Die Strömung zwischen der Drosselstelle und dem Behältereintritt ist also umlenkungsfrei geführt, so dass die Stabilität des Flüssigkeitsstrahles durch Stromauf-Wirkung einer asymmetrischen Druckverteilung über den Querschnitt des Strömungskanals nicht beeinträchtigt wird. Die Luftblasen gelangen unmittelbar in den Behälter und können dort aufgrund ihres großen Volumens und des damit verbundenen erhöhten Auftriebs leicht abgeschieden werden, was zu einer raschen Entgasung und Entwässerung des Öls führt.

Der Kern dieser vorteilhaften Weiterbildung besteht darin, dass es hinter der Drosselstelle eine gerade Rohrstrecke gibt, damit sich die Kavitations- oder Superkavitationszone ausbilden kann. Anschließend können aber auch Umlenkungen vorhanden sein. Vorteilhaft ist, dass die Strömungsstrecke vom Zusammenfall des Dampfgebietes bis zum Tank möglichst kurz ist, damit die Luftblasen möglichst wenig Zeit haben wieder in Lösung zu gehen.

Gegebenenfalls ist ein separater Hochdruckkreis mit einer hydrostatischen Verdrängerpumpe vorhanden, die aus dem Behälter Hydraulikfluid ansaugt, das über die Düse zum Behälter zurückströmt. Dann ist in jedem Betriebspunkt einer Hydraulikanlage, der der separate Hochdruckkreis für die Entgasung zugeordnet ist, eine zuverlässige Entgasung und Entwässerung gewährleistet. Denkbar ist es jedoch auch, dass als Druckquelle eine Pumpe herangezogen wird, die einen oder mehrere hydraulische Verbraucher mit Druckmittel versorgt, wobei ein Teil des von der Pumpe geförderten Öls als Nebenstrom über die Düse fließt.

Wie schon gesagt kann die von außen zugeführte Luft aufgrund des Unterdrucks in der Kavitationszone der Umgebung entnommen sein. Der Luftpfad ist dann am einen Ende zur Umgebung offen. Durch Anschluss an eine entsprechende Luftversorgungseinrichtung kann auch Druckluft oder heiße Luft oder kalte Luft oder trockene Luft zugeführt werden. Durch ein Luftfilter kann vermieden werden, dass Schmutz in das Öl eingetragen wird.

Zur Verbesserung der Abscheidung der Luftblasen und zur Einstellung eines konstanten Luftgehaltes in Hydraulikanlagen kann die Zufuhr der Luft von außen in einem gepulsten Betrieb erfolgen, so dass die Kavitation beziehungsweise die Superkavitation genutzt wird, um abwechselnd bei geringer Abscheidung von Wasser zu entgasen oder aus zusätzlich angesaugter Luft oder aktiv zugeführter Luft sehr kleine Luftblasen entstehen zu lassen zu entgasen und in hohem Maße Wasser abzuscheiden.

Die mit der Erfindung erzielbaren Vorteile bestehen darin, dass eine effektive und effiziente Entgasung und Entwässerung erfolgt, sich diese kostengünstig und robust realisieren lassen und vom Grundsatz her nur passive Komponenten erforderlich sind. Mehrere Ausführungsbeispiele einer erfindungsgemäßen hydraulischen Einrichtung zur Entgasung und Entwässerung von Hydrauliköl sind in den Zeichnungen dargestellt. Anhand dieser Zeichnungen wird die Erfindung nun näher erläutert.

Es zeigen
- Figur 1: ein Beispiel, welches nicht unter der Definition der Ansprüche fällt, innerhalb einer hydraulischen Anlage, wobei das zur Entgasung und Entwässerung durch eine Separierungseinheit fließende Hydrauliköl von einer Hilfspumpe gefördert wird,
- Figur 2: ein Beispiel, welches nicht unter der Definition der Ansprüche fällt, innerhalb einer hydraulischen Anlage mit Entnahme des zu entgasenden und zu entwässernden Hydrauliköls an der Druckseite einer Hauptpumpe,
- Figur 3: ein erstes Ausführungsbeispiel innerhalb einer hydraulischen Anlage, wobei das zur Entgasung und Entwässerung durch eine Separierungseinheit fließende Hydrauliköl wie bei dem Beispiel nach Figur 1 von einer Hilfspumpe gefördert wird und der Separierungseinheit zusätzliche Luft von außen zugeführt wird,
- Figur 4: ein zweites Ausführungsbeispiel innerhalb einer hydraulischen Anlage ähnlich dem aus Figur 3, jedoch mit einem Schaltventil zur gepulsten Zuführung von zusätzlicher Luft, und
- Figur 5: die Separierungseinheit der Einrichtungen aus den Figuren 3 und 4 mit Einzelheiten.

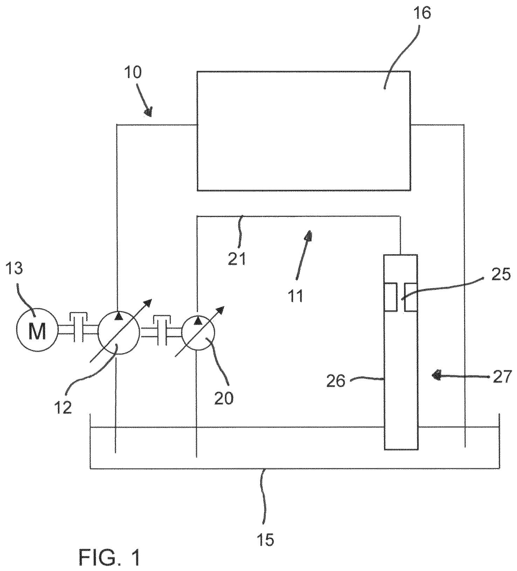

Die hydraulische Anlage gemäß Figur 1 umfasst einen hydraulischen Arbeitskreis 10 und einen hydraulischen Nebenkreis 11, der die Einrichtung zur Entgasung und Entwässerung darstellt. Zu dem Arbeitskreis 10 gehören eine hydrostatische Hauptpumpe 12 in Verdrängerbauart, die in ihrem Hubvolumen verstellbar ist und von einem Motor 13, der zum Beispiel ein Verbrennungsmotor oder ein Elektromotor ist, antreibbar ist. Von der Verdrängerpumpe 12 werden gegebenenfalls über ein oder mehrere Hydraulikventile ein oder mehrere hydraulische Verbraucher mit Hydrauliköl versorgt. Die Verdrängerpumpe 12 saugt das den hydraulischen Verbrauchern zufließende Hydrauliköl aus einem Tank 15 an, in den das von den hydraulischen Verbrauchern abfließende Hydrauliköl zurückströmt.

Die hydraulischen Verbraucher und die hydraulischen Ventile sind in Figur 1 stark vereinfacht dargestellt und allgemein mit der Bezugszahl 16 versehen.

Der hydraulische Nebenkreis 11 ist ein separater Hochdruckkreis und dient der Entgasung und der Entwässerung des sich im Tank 15 befindlichen Hydrauliköls. Der Nebenkreis und damit die Einrichtung zur Entgasung und Entwässerung des Hydrauliköls umfasst eine Hilfspumpe 20 in Verdrängerbauart, die ebenfalls in ihrem Hubvolumen verstellbar ist und die über einen Durchtrieb der Hauptpumpe 12 ebenfalls von dem Motor 13 antreibbar ist. Die Hilfspumpe 20 saugt Hydraulikfluid aus dem Tank 15 an und fördert es über eine Hydraulikleitung 21 zum Tank 15 zurück. Die Hydraulikleitung 21 führt zu einer Drosselstelle, die als Düse 25 ausgebildet ist, über die das von der Hilfspumpe 20 geförderte Hydrauliköl zum Tank 15 strömt.

Von der Düse 25 in den Tank gelangt das Hydraulikfluid über ein Rohr 26, das sich unmittelbar an die Düse 25 anschließt oder in das die Düse eingebaut ist, gerade verläuft und dessen der Düse fernes, offenes Ende sich immer unterhalb des Flüssigkeitsniveaus innerhalb des Tanks 15 befindet, auch wenn sich das Flüssigkeitsniveau im Betrieb verändert. Durch das Rohr 26 ist ein Strömungskanal realisiert. Die Düse 25 bildet mit dem Rohr 26 eine Separierungseinheit 27. Die Düse ist dabei zu dem Rohr 26 derart angeordnet, dass der Auslass der Düse in der Rohrmittelachse liegt und der Hydraulikölstrahl bis zu seinem Kollaps entlang der Rohrmittelachse verläuft. Das Rohr wiederum ist im vorliegenden Fall so angeordnet, dass die Achse des Rohres und auch der Hydraulikölstrahl in Richtung der Gravitationskraft verlaufen.

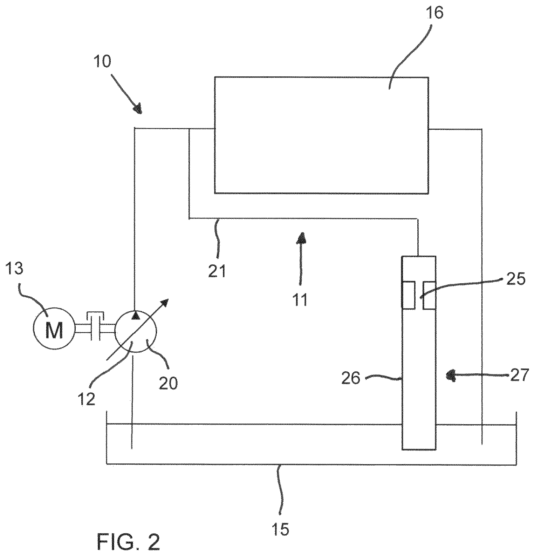

Die hydraulische Anlage gemäß Figur 2 umfasst wie diejenige nach Figur 1 einen hydraulischen Arbeitskreis 10 und einen hydraulischen Nebenkreis 11, der die Einrichtung zur Entgasung und Entwässerung darstellt. Zu dem Arbeitskreis 10 gehören eine hydrostatische Hauptpumpe 12 in Verdrängerbauart, die in ihrem Hubvolumen verstellbar ist und von einem Motor 13, der zum Beispiel ein Verbrennungsmotor oder ein Elektromotor ist, antreibbar ist. Von der Verdrängerpumpe 12 werden gegebenenfalls über ein oder mehrere Hydraulikventile ein oder mehrere hydraulische Verbraucher mit Hydrauliköl versorgt. Die Verdrängerpumpe 12 saugt das den hydraulischen Verbrauchern zugeförderte Hydrauliköl aus einem Tank 15 an, in den das von den hydraulischen Verbrauchern abfließende Hydrauliköl zurückströmt.

Die hydraulischen Verbraucher und die hydraulischen Ventile sind wie in Figur 1 stark vereinfacht dargestellt und allgemein mit der Bezugszahl 16 versehen.

Von dem Beispiel nach Figur 1 unterscheidet sich das Beispiel nach Figur 2 nur darin, dass der hydraulische Nebenkreis 11, der der Entgasung und der Entwässerung des sich im Tank 15 befindlichen Hydrauliköls dient, nun insofern Teil des Arbeitskreises ist, als das der Separierungseinheit 27 zufließende Hydrauliköl Öl ist, das von der Hauptpumpe 12 gefördert und am Druckanschluss der Hauptpumpe 12 abgezweigt wird. Entgast und entwässert werden kann also immer dann, wenn der Druck am Druckanschluss der Pumpe während der Versorgung eines oder mehrerer hydraulischer Verbraucher genügend hoch ist. Alternativ kann die Entgasung und Entwässerung intermittierend betrieben werden, wenn gerade kein hydraulischer Verbraucher von der Hauptpumpe 12 zu versorgen ist. Vom Druckanschluss der Pumpe 12 fließt Hydrauliköl über eine Hydraulikleitung 21 der Separierungseinheit 27 zu, die dieselbe wie bei dem Beispiel nach Figur 1 ist, und gelangt über die Separierungseinheit zum Tank 15 zurück.

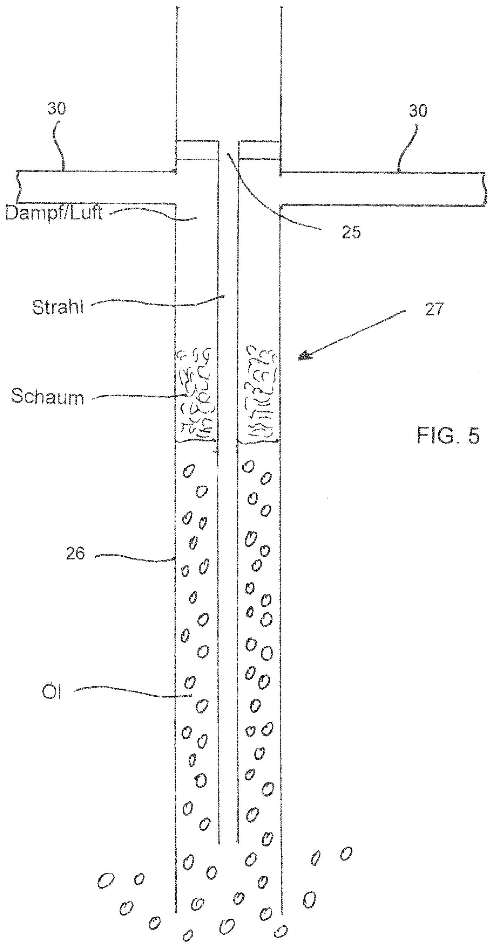

Zur Darstellung der Vorgänge in der Separierungseinheit 27 wird schon hier auf die Figur 5 verwiesen. Durch geeignete Wahl des Druckverlusts über die Düse 25 und der Größe des Volumenstroms wird stromab der Düse 25 in dem Rohr 26 durch Superkavitation ein Flüssigkeitsstrahl erzeugt, der über eine gewisse Strecke von einem zusammenhängenden Gebiet aus Flüssigkeitsdampf, im vorliegenden Fall aus Öldampf mit einem geringen Anteil von Wasserdampf, und Luft umgeben ist. An dieses Gebiet schließt sich aufgrund des Kondensierens von verdampfter Flüssigkeit ein Gebiet mit Schaum an, das ebenfalls den mittigen Flüssigkeitsstrahl umgibt. Schließlich ist aller Öldampf kondensiert und man hat eine Flüssigkeit, in der sich große Gasblasen befinden, die in der Hauptsache Luft, aber auch Wasserdampf enthalten, da Luft temperaturabhängig Wasser aufnehmen kann. In Figur 5 sind die verschiedenen Bereiche, die in dem Rohr 26 bestehen, angedeutet. Das Gebiet aus Flüssigkeitsdampf und Luft kann dabei je nach den verwendeten Parametern auch über die gesamte Länge des Rohres reichen. Die großen Luftblasen und somit auch das in ihnen enthaltene Wasser gelangen in dem Tank 15 in den Bereich oberhalb des Flüssigkeitsniveaus und über eine Öffnung im Tank ins Freie. In der Öffnung kann sich ein Luftfilter befinden, durch den verhindert wird, dass Schmutz aus der Umgebung in den Tank gelangt. Aus dem Hydrauliköl werden somit Luft und Wasser abgeschieden.

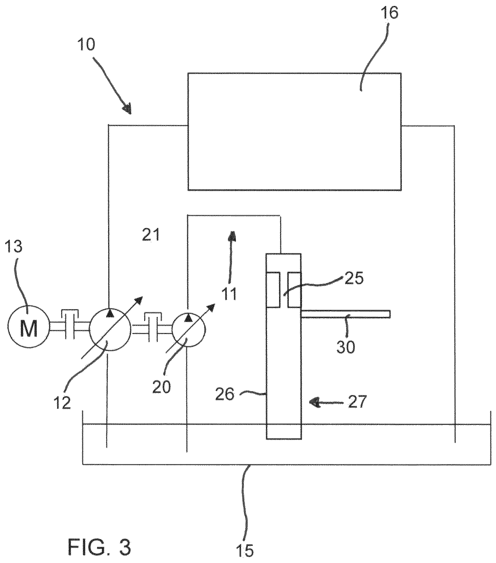

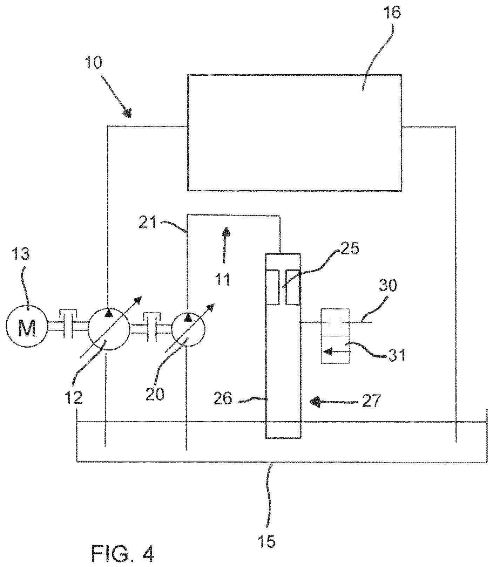

Um die Abscheidungsrate von Wasser zu erhöhen, ist bei den aus den Figuren 3 und 4 ersichtlichen hydraulischen Einrichtungen zur Entgasung und Entwässerung von Hydrauliköl vorgesehen, zusätzlich zu der aus dem Hydrauliköl freigesetzten Luft erfindungsgemäß Umgebungsluft von außen in das Hydrauliköl einzubringen. Abgesehen davon sind die hydraulischen Anlagen gemäß den Figuren 3 und 4 genauso ausgebildet wie die hydraulische Anlage gemäß Figur 1 und haben einen hydraulischen Arbeitskreis 10 mit der Hauptpumpe 12, dem Tank 15 und dem hydraulischen Equipment 16 und einen hydraulischen Nebenkreis 11 mit der Hilfspumpe 20, der Hydraulikleitung 21 und der Separierungseinheit 27.

Gemäß den Figuren 3 und 4 weist das Rohr 26 der Separierungseinheit 27 in der Kavitationszone stromab der Düse 25 eine Öffnung mit einem Luftanschluss 30 auf, der als Luftpfad direkt in die Umgebung führt. Aufgrund des im Betrieb der Separierungseinheit 27 in der Kavitationszone auftretenden Unterdrucks strömt über den Luftpfad aus der Umgebung zusätzliche Luft in die Kavitationszone, was letztlich zu zahlreichen sehr kleinen Luftblasen und damit in Summe zu einer großen Luftblasenoberfläche führt. Durch diese große Luftblasenoberfläche erhält man eine hohe Abscheidungsrate von Wasser.

Es ist möglich, am Rohr 26 auf gleicher Höhe zwei oder mehr Luftanschlüsse 30 in rotationssymmetrischer Weise anzuordnen sind, wie dies aus Figur 5 hervorgeht, wo zwei Luftanschlüsse vorhanden sind, die sich am Rohr 26 diametral gegenüberliegen. Insgesamt liegen somit symmetrische Verhältnisse vor.

Zur Verbesserung der Abscheidung der Luftblasen und zur Einstellung eines konstanten Luftgehalts ist ein gepulster Betrieb vorteilhaft, wie er bei der aus Figur 4 ersichtlichen Einrichtung zur Entgasung und Entwässerung von Hydrauliköl vorgesehen ist und in dem Phasen mit der Zufuhr von zusätzlicher Luft mit Phasen ohne Zufuhr von zusätzlicher Luft abwechseln. Gemäß Figur 4 ist in den Luftanschluss 30 eine 2/2-Wege-Schaltventil 31 eingefügt, das die Zufuhr von zusätzlicher Luft in einer ersten Schaltstellung sperrt und in einer zweiten Schaltstellung zulässt. Der Wechsel in den Schaltstellungen des Schaltventils 31 und damit die Pulsation erfolgt dabei in der Weise, dass die bei der Entgasung entstehenden großen Blasen mit den von außen zugeführten kleinen Blasen koaleszieren und somit große Luft- und Wassermengen an der Öloberfläche abscheiden.

Im Tank 15 herrscht üblicherweise Atmosphärendruck. Deshalb lässt sich bei allen gezeigten Ausführungsbeispielen die Druckdifferenz über die Düse 25 zum Beispiel dadurch einstellen, dass die zur Separierungseinheit fördernde Hilfspumpe 20 oder die Hauptpumpe 12 im intermittierenden Betrieb druckgeregelt ist. Der Volumenstrom ergibt sich dann durch den gewählten Öffnungsquerschnitt der Düse 25. Hierbei führt ein großer Volumenstrom zu einer schnelleren Entgasung und Entwässerung, jedoch auch zu einem erhöhten Wärmeeintrag. Durch einen kleinen Volumenstrom kann der Wärmeeintrag verringert werden. Die Abstimmung zwischen Entgasungs-/Entwässerungsgeschwindigkeit und Wärmeeintrag erfolgt in Abhängigkeit von der jeweiligen Anlage. Die Druckregelung der Hilfspumpe ist vor allem dann vorteilhaft, wenn die Drehzahl des Motors 13 stark variiert.

Die Hilfspumpe kann jedoch auch eine Konstantpumpe sein. Ihre in Abhängigkeit von den Erfordernissen der jeweiligen Anlage gewählte Fördermenge und der Öffnungsquerschnitt der Düse 25 werden dann so aufeinander abgestimmt, dass sich stromauf der Düse 25 der gewünschte Druck einstellt. Eine solche Ausbildung ist vor allem dann vorteilhaft, wenn die Drehzahl des Motors 13 nicht stark variiert.

Das über die Düse 25 zum Tank 15 strömende Hydrauliköl wird bevorzugt dann dem Arbeitskreis entnommen, wenn dort der Druck konstant oder überwiegend so hoch ist, dass an der Düse 25 Superkavitation bewirkt wird.

Des Weiteren besteht die Möglichkeit, den Sauerstoffgehalt und/oder den Luftgehalt im Hydraulikfluid zu messen und die Einrichtung zur Entgasung und Entwässerung beim Überschreiten festgelegter Grenzwerte im geregelten oder intermittierenden Betrieb zu betreiben. Zur Erfassung des Sauerstoffgehalts und/oder des Luftgehalts können wiederum Sensoren vorgesehen sein. Hierfür geeignete Stellen befinden sich im Hochdruckbereich der Pumpen, im Niederdruckbereich des Arbeitskreises oder an verschiedenen Positionen im Tank.

### Bezugszeichenliste

- 10: hydraulischer Arbeitskreis
- 11: hydraulischer Nebenkreis
- 12: Hauptpumpe
- 13: Motor
- 15: Tank
- 16: hydraulisches Equipment
- 20: Hilfspumpe
- 21: Hydraulikleitung
- 25: Düse
- 26: Rohr
- 27: Separierungseinheit
- 30: Luftanschluss
- 31: Schaltventil

## Patentansprüche

1. Hydraulische Einrichtung zur Entgasung und Entwässerung eines Hydrauliköls, umfassend:
eine Druckquelle (20), eine Luftquelle, ein Strömungskanal (26), eine als Düse ausgebildete Drosselstelle (25), wobei der Auslass der Düse mit der Mittelachse des Strömungskanals zusammenfällt, wobei zu entgasendes Hydrauliköl von der Druckquelle (20) aus über die Drosselstelle (25) strömt, wobei die über die Drosselstelle (25) strömende Flüssigkeitsmenge und der Durchflussquerschnitt der Drosselstelle (25) derart aufeinander abgestimmt sind, dass sich stromab der Drosselstelle (25) eine Kavitations- oder Superkavitationszone ausbildet, wobei die Einrichtung einen Luftpfad (30) umfasst, dessen eines Ende an die Luftquelle angeschlossen ist, und dessen anderes Ende sich stromab der Drosselstelle (25) direkt in oder an der Kavitations- oder Superkavitationszone befindet, sodass Luft von außen über den Luftpfad (30) in das Hydrauliköl einbringbar ist.

2. Hydraulische Einrichtung nach Patentanspruch 1, wobei sich an die Drosselstelle (25) ein Strömungskanal (26) mit einem gegenüber dem Durchflussquerschnitt der Drosselstelle (25) wesentlich größeren Durchflussquerschnitt anschließt und dass die Luft in den Strömungskanal (26) einbringbar ist.

3. Hydraulische Einrichtung nach Patentanspruch 2, wobei der Strömungskanal (26) von der Drosselstelle (25) aus gerade verläuft und im Gebrauch eine Achse hat, die in Richtung der Gravitationskraft verläuft.

4. Hydraulische Einrichtung nach Patentanspruch 2 oder 3, wobei der Strömungskanal (26) in seiner Wand eine Öffnung aufweist, an die der Luftpfad (30) angeschlossen ist.

5. Hydraulische Einrichtung nach Patentanspruch 2, 3 oder 4, wobei sie einen Behälter (15) zur Aufnahme von Hydrauliköl umfasst und wobei der Strömungskanal (26) innerhalb des sich in dem Behälter (15) befindlichen Hydrauliköls endet.

6. Hydraulische Einrichtung nach Patentanspruch 5, wobei beim Kondensieren von Dampf entstehende und in den Behälter (15) gelangende Luftblasen im Behälter (15) abgeschieden werden.

7. Hydraulische Einrichtung nach Patentanspruch 5 oder 6, wobei sie eine hydrostatische Verdrängerpumpe (20) umfasst, die aus dem Behälter (15) Hydrauliköl ansaugt, das über die Drosselstelle (25) zum Behälter (15) zurückströmt.

8. Hydraulische Einrichtung nach einem der Patentansprüche 1 bis 7, wobei der Luftpfad (30) am einen Ende zur Umgebung offen ist.

9. Hydraulische Einrichtung nach einem der Patentansprüche 1 bis 7, wobei der Luftpfad (30) am einen Ende an eine Luftversorgungseinrichtung angeschlossen ist.

10. Hydraulische Einrichtung nach einem der Patentansprüche 1 bis 9, wobei in den Luftpfad (30) ein Ventil (31) eingefügt ist, mit dem die Luftzufuhr absperrbar ist.

## Claims

1. Hydraulic device for degassing and dewatering a hydraulic oil, comprising:
a pressure source (20), an air source, a flow channel (26), a nozzle-shaped throttle point (25); wherein the outlet of the nozzle coincides with the centre axis of the flow channel, wherein hydraulic oil to be degassed flows from the pressure source (20) via the throttle point (25), wherein the quantity of liquid flowing via the throttle point (25) and the throughflow cross section of the throttle point (25) are coordinated with each other such that a cavitation or supercavitation zone is formed downstream of the throttle point (25), wherein the device comprises an air path (30), one end of which is connected to the air source, and the other end of which is situated downstream of the throttle point (25) directly in or at the cavitation or supercavitation zone, with the result that air can be introduced into the hydraulic oil from the outside via the air path (30).

2. Hydraulic device according to Patent Claim 1, wherein a flow channel (26) with a substantially larger throughflow cross section compared to the throughflow cross section of the throttle point (25) adjoins the throttle point (25), and wherein the air can be introduced into the flow channel (26).

3. Hydraulic device according to Patent Claim 2, wherein the flow channel (26) runs straight from the throttle point (25) and, in use, has an axis that runs in the direction of the gravitational force.

4. Hydraulic device according to Patent Claim 2 or 3, wherein the flow channel (26) has, in its wall, an opening, to which the air path (30) is connected.

5. Hydraulic device according to Patent Claim 2, 3 or 4, wherein it comprises a container (15) for receiving hydraulic oil, and wherein the flow channel (26) ends within the hydraulic oil contained in the container (15).

6. Hydraulic device according to Patent Claim 5, wherein air bubbles, which arise when steam condenses and pass into the container (15), are separated in the container (15).

7. Hydraulic device according to Patent Claim 5 or 6, wherein it comprises a hydrostatic positive displacement pump (20) which draws hydraulic oil from the container (15), which flows back via the throttle point (25) to the container (15).

8. Hydraulic device according to one of Patent Claims 1 to 7, wherein the air path (30) is open at one end to the environment.

9. Hydraulic device according to one of Patent Claims 1 to 7, wherein the air path (30) is connected at one end to an air supply device.

10. Hydraulic device according to one of Patent Claims 1 to 9, wherein a valve (31) is inserted into the air path (30), by way of which the air supply can be shut off.

## Revendications

1. Dispositif hydraulique pour le dégazage et la déshydratation d'une huile hydraulique, comprenant :
une source de pression (20), une source d'air, un canal d'écoulement (26), un point d'étranglement (25) conçu sous la forme d'une buse ; la sortie de la buse coïncidant avec l'axe central du canal d'écoulement, l'huile hydraulique à dégazer s'écoulant de la source de pression (20) sur le point d'étranglement (25), la quantité de liquide s'écoulant sur le point d'étranglement (25) et la section de passage du point d'étranglement (25) étant adaptées l'une à l'autre de telle sorte qu'une zone de cavitation ou de super-cavitation soit formée en aval du point d'étranglement (25), le dispositif comprenant un chemin d'air (30) dont une extrémité est raccordée à la source d'air et dont l'autre extrémité se trouve en aval du point d'étranglement (25) directement dans ou au niveau de la zone de cavitation ou de super-cavitation, de sorte que de l'air est apte à être introduit dans l'huile hydraulique depuis l'extérieur via le chemin d'air (30).

2. Dispositif hydraulique selon la revendication 1, dans lequel un canal d'écoulement (26) avec une section d'écoulement nettement plus grande que la section d'écoulement du point d'étranglement (25) se raccorde au point d'étranglement (25) et en ce que de l'air est apte à être introduit dans le canal d'écoulement (26).

3. Dispositif hydraulique selon la revendication 2, dans lequel le canal d'écoulement (26) s'étend en ligne droite à partir du point d'étranglement (25) et présente, en utilisation, un axe qui s'étend dans la direction de la force de gravitation.

4. Dispositif hydraulique selon la revendication 2 ou la revendication 3, dans lequel le canal d'écoulement (26) présente dans sa paroi une ouverture à laquelle est raccordé le chemin d'air (30).

5. Dispositif hydraulique selon la revendication 2, 3 ou 4, comprenant un récipient (15) destiné à contenir de l'huile hydraulique et dans lequel le canal d'écoulement (26) se termine à l'intérieur de l'huile hydraulique contenue dans le récipient (15).

6. Dispositif hydraulique selon la revendication 5, dans lequel les bulles d'air qui se forment lors de la condensation de la vapeur et qui parviennent dans le récipient (15) sont séparées dans le récipient (15).

7. Dispositif hydraulique selon la revendication 5 ou la revendication 6, comprenant une pompe volumétrique hydrostatique (20) qui aspire du récipient (15) de l'huile hydraulique qui retourne au récipient (15) par l'intermédiaire du point d'étranglement (25).

8. Dispositif hydraulique selon l'une des revendications 1 à 7, dans lequel le chemin d'air (30) est ouvert sur l'environnement à une extrémité.

9. Dispositif hydraulique selon l'une des revendications 1 à 7, dans lequel le chemin d'air (30) est raccordé à une extrémité à un dispositif d'alimentation en air.

10. Dispositif hydraulique selon l'une des revendications 1 à 9, dans lequel une vanne (31) est insérée dans le chemin d'air (30), au moyen de laquelle l'alimentation en air peut être coupée.
